# EUROPEAN PATENT APPLICATION

(11) **EP 3 875 249 A1**
(43) Date of publication of application: **08.09.2021**
(21) Application number: 20161177.9
(22) Date of filing: 05.03.2020
(51) Int. Cl.: B29C 64/129, B29C 70/62, B33Y 30/00, B33Y 70/00

(54) **RESIN BASED ADDITIVE MANUFACTURING PROCESS, CONTAINER AND ADDITIVE MANUFACTURING SYSTEM**

(71) Applicant: Nederlandse Organisatie voor toegepast- natuurwetenschappelijk Onderzoek TNO, 2595 DA 's-Gravenhage (NL); Chemelot Scientific Participations B.V., 6167 RD Geleen (NL)
(72) Inventor: VALEGA MACKENZIE, Fidel Orlando, 2595 DA 's-Gravenhage (NL); BEX, Guy Johan Peter, 2595 DA 's-Gravenhage (NL); INGEHUT, Bastiaan Leonardus Joseph, 2595 DA 's-Gravenhage (NL); TEN CATE, Aafke Tessa, 2595 DA 's-Gravenhage (NL)
(74) Representative: V.O.

(57) **Abstract**

The present document relates to a resin based additive manufacturing process for manufacturing an object from a building material, wherein the building material is held in a container comprising at least one translucent wall. The method comprises curing a layer of the object which is performed by providing optical radiation through the translucent wall to illuminate the layer. The building material comprises a two-phase electro-active suspension fluid including a mix of particles in a liquid medium. The translucent wall comprises an electrode arrangement of at least two electrodes. An electric field is applied to the building material prior to curing the layer for clustering particles within the two-phase electro-active suspension fluid during said curing. The document further relates to a container for use in a resin based additive manufacturing process, and to an additive manufacturing system.

## Description

### Field of the invention

The present invention is directed at a resin based additive manufacturing process for manufacturing an object from a building material, wherein the building material is held in a container comprising at least one translucent wall, the method comprising the steps of: curing at least one layer of the object onto a carrier surface or onto a preceding cured layer of the object, wherein the curing is performed by providing optical radiation from an optical source through the translucent wall such as to illuminate the at least one layer to be cured. The invention is further directed at a container for use in a resin based additive manufacturing process, wherein the container is suitable for holding a building material, wherein the container comprises a plurality of walls for defining an interior of the container, the walls including at least a bottom wall and one or more side walls, wherein at least one wall of the plurality of walls is a translucent wall for enabling optical radiation to enter the container for curing the building material. Furthermore, the invention is directed at an additive manufacturing method.

### Background

Today, by far, the functionality that additive manufacturing offers is the rapid manufacturing of objects with arbitrary geometrical shapes. This makes the technology well suitable for prototyping, which is one of the most common fields of application of 3D printing. The technology nowadays is applied in a number of other fields of application, such as the fabrication of (small) replacement parts, biomedical applications and personalized items , to name a few.

However, one of the drawbacks of additive manufacturing is that the technology is mainly limited to the above functionality: it allows for the printing of complex geometrical shapes, but it does not allow to modify material properties, such as integrity, thermal properties, electrical properties, magnetic properties, etcetera. It is expected that once this drawback has been resolved, the popularity of the technology will again be boosted as it would render the technology to be suitable for application in numerous additional fields of application.

### Summary of the invention

It is an object of the present invention to alleviate and at least partially resolve the abovementioned drawbacks, and to provide an additive manufacturing method that enables design of material properties within an object to be built.

To this end, there is provided herewith a resin based additive manufacturing process for manufacturing an object from a building material, wherein the building material is held in a container comprising at least one translucent wall, the method comprising the steps of: curing at least one layer of the object onto a carrier surface or onto a preceding cured layer of the object, wherein the curing is performed by providing optical radiation from an optical source through the translucent wall such as to illuminate the at least one layer to be cured; wherein the building material comprises a two-phase electro-active suspension fluid including a mix of particles in a liquid medium, and wherein the translucent wall comprises an electrode arrangement of at least two electrodes, wherein the method further comprises: applying, by the electrode arrangement and prior to the step of curing the at least one layer, an electric field to the building material for clustering a plurality of the particles within the two-phase electro-active suspension fluid during said curing of the building material.

The present invention is based on the insight that a two-phase electro-active suspension fluid can be applied in combination with a designable electric field, during curing of a layer of an object to be built, in order to render a large number of material properties such as density, strength, thermal properties, electrical properties, magnetic properties, flexibility, hardness, and many more to become controllable. The application of an electric field in the electro-active suspension fluid causes the particles in the suspension to organize, forming e.g. chains, clusters or networks dependent on how the field is applied. By applying the electric field, particles present in the field will polarize. The polarization of the particles provides them with a preferred orientation and mutual spatial arrangement such that the amount of potential energy of the system (field + build material) is a minimum. The liquid medium of the suspension provides the particles with sufficient mobility to enable such a reorganization of the spatial arrangement and orientation; hence the particles will be able to align and organize such as to form clusters, chains, bridges between electrodes. As a result, during the manufacturing process, the material properties may be controlled by suitably applying the electric field during curing. This may be achieved for the object as a whole, i.e. integrally for the complete object, or locally within the object in certain parts thereof such as to render the desired properties within the material of the fabricated object to become anisotropic rather than isotropic.

The above principle may advantageously be used to control various material aspects and properties of the object to be printed. The local or global reorganization of particles performed during curing, enables to achieve various different functional properties of the object. For example, the reordering of asymmetric (e.g. longitudinally shaped) particles to align these in e.g. the axial direction enables to increase the strength of the object, e.g. in particular with respect to forces aligned with that direction. Also, clustering of particles locally increases the density thereof - if the particles have a certain property, clustering the particles may locally increase that property. For example, clustering electrically conductive particles locally reduces the electric resistance and increases the conductance. Also, locally clustering thermally isolating particles will likewise reduce thermal conductance locally. Another advantage is that the principle may be used to support further processes that may be applied to achieve certain material properties. For example, forming a chain or bridge of particles, or an alignment or clustering, may advantageously be used to perform polymerization to achieve and/or control certain properties of an object, for example through photopolymerization. In fact, the curing step performed under illumination by optical radiation, already is a photopolymerization step. The ordering of particles in clusters or chains during curing enables to achieve increased chain lengths, thereby enabling to control the local structural integrity of the object.

In some embodiments, the electrode arrangement comprises a plurality of electrodes forming an electrode array, and the step of applying the electric field comprises selectively powering one or more electrodes for selectively applying a local electric field near the one or more powered electrodes, such as to form an arrangement of clusters of particles in the suspension fluid during the curing. In these embodiments, applying an electric field locally will cause the material properties of to become locally different from the surroundings. Hence, this may be applied to amplify or suppress certain material properties locally, as described above.

In some embodiments, the optical source is configured for selectively illuminating, using a controller, pixels of the layer to be cured, wherein the step of curing is performed by selectively exposing, in accordance with layer curing data, one or more pixels in the layer to the optical radiation; and the step of selectively powering the one or more electrodes is performed using the controller based on layer clustering data for clustering of the particles during curing of the at least one layer. The use of both layer clustering data and layer curing data provides complete control over the method of the invention. The layer clustering data can be different from the layer curing data, such the latter provides the controller with information on which parts of the objects (e.g. voxels) are to be cured in the respective layer, whereas the former - the layer clustering data - provides the controller with information on where to cluster (or alternatively distribute) the particles to achieve a locally advantageous material property.

In some embodiments, the particles of the two-phase electro-active suspension fluid comprise at least one of a group comprising: spherical particles, non-spherical particles, symmetric particles, asymmetric particles, longitudinal particles, curved particles, arbitrary shaped particles, electrically conductive particles, electrically isolating particles, thermally conductive particles, thermally isolating particles, magnetic particles, non-magnetic particles, coated particles, hollow particles, solid particles, rigid particles, flexible particles, transparent or translucent particles, opaque particles. In principle, the invention is really not limited in terms of material properties of the particles, although of course the particles need to be polarizable under influence of an applied electric field.

Generally, in accordance with some embodiments, the particles and the liquid medium comprised by the two-phase electro-active suspension fluid are selected such that a relative permittivity of the particles is different from a relative permittivity of the liquid medium, preferably such that the relative permittivity of the particles at least 20% smaller or larger than the relative permittivity of the medium, more preferably such that the relative permittivity of the particles is at least two times the relative permittivity of the liquid medium or that the relative permittivity of the particles is less than half of that of the liquid medium.

In some embodiments, the additive manufacturing process is at least one of a stereolithographic process or a digital light processing process.

In accordance with a second aspect, there is provided a container for use in a resin based additive manufacturing process, wherein the container is suitable for holding a building material, wherein the container comprises a plurality of walls for defining an interior of the container, the walls including at least a bottom wall and one or more side walls, wherein at least one wall of the plurality of walls is a translucent wall for enabling optical radiation to enter the container for curing the building material, wherein the container is suitable for holding a two-phase electro-active suspension fluid as being comprised by the building material, and wherein the translucent wall comprises an electrode arrangement of at least two electrodes for applying an electric field to the building material for enabling a clustering of particles within the two-phase electro-active suspension fluid during curing of the building material.

In some embodiments, the electrode arrangement comprises a plurality of electrodes forming an electrode array, for enabling a local electric field to be selectively applied near each of the electrodes. For example, in some embodiments, the electrodes are arranged in a pattern, wherein the pattern includes one or more of a group comprising: parallel electrodes, concentrically arranged electrodes, spirally arranged electrodes, electrodes arranged in a star pattern, or a matrix pattern of electrodes. For example, in some of these embodiments, the at least two electrodes of the electrode arrangement are connected such that the electrodes are selectively operable to be powered at different voltages or at a same voltage with different polarities. In these embodiments, applying an electric field locally will cause the material properties of to become locally different from the surroundings. Hence, this may be applied to amplify or suppress certain material properties locally, as described above.

In some embodiments, the translucent wall comprises a conductive transparent layer, wherein the conductive transparent layer is patterned such as to form the electrode arrangement. For example, an electrode layer may be fabricated by implementing an electrode layer using a transparent conductive oxide (TCO), such as (but not limited to) indium tin oxide (ITO). The skilled person may appreciate that the transparent electrode layer may be made of a different material, such as a doped binary compound like aluminum-doped zinc oxide (AZO) and indium-doped cadmium oxide; or a transparent metal oxide layer such as barium stannate, strontium vanadate or calcium vanadate. Alternatives to these materials will be apparent to the skilled person, and may be applied in a container in accordance with the present invention. As will be appreciated, the transparent electrode layer enables to apply an electric field there where the layer is illuminated with optical radiation for curing thereof, hence enabling the control of material properties locally.

In accordance with some embodiments, the electrode arrangement comprises a plurality of electrodes arranged side-by-side in one or more directions, wherein each electrode is configured for being operated at a different polarity with respect to its neighboring electrodes in the or each direction. For example, this could be achieved with a checkered arrangement of electrodes, or another regular pattern in one or more directions in a two-dimensional plane.

In some embodiments, the container further comprises a controller configured for selectively operating each of the electrodes of the electrode arrangement dependent on layer clustering data for a layer of the building material to be cured, for local clustering of the particles near the selectively operated electrodes. Advantages thereof have been described above.

In a third aspect of the invention, there is provided an additive manufacturing system for applying a resin based additive manufacturing process for manufacturing an object from a building material, wherein the system comprises a controller, a container comprising at least one translucent wall, a carrier surface for supporting a surface of an object to be manufactured, wherein the carrier surface is configured to be suspended in or above the container, and an optical source configured for emitting optical radiation for curing a layer of the building material onto the carrier surface or onto a preceding cured layer of the object, wherein the optical source is configured for selectively illuminating, using the controller, pixels of the layer to be cured, wherein the container is suitable for holding the building material which includes a two-phase electro-active suspension fluid, the suspension fluid including a mix of particles in a liquid medium, and wherein the translucent wall comprises an electrode arrangement of at least two electrodes for applying an electric field to the building material for enabling a clustering of particles within the two-phase electro-active suspension fluid during curing of the building material. The additive manufacturing system may, in some embodiments, be at least one of a stereolithographic system or a digital light processing system.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a method in accordance with the present invention;
Figure 2 schematically illustrates an electrode arrangement for use in a container in accordance with the present invention;
Figure 3 schematically illustrates an alternative electrode arrangement for use in a container in accordance with an embodiment of the present invention;
Figure 4 schematically illustrates another electrode arrangement for use in a container in accordance with the present invention;
Figure 5 schematically illustrates a further alternative electrode arrangement and the working thereof, for use in a container in accordance with an embodiment;
Figure 6 schematically illustrates an additive manufacturing system in accordance with the present invention;
Figure 7 schematically illustrates a cross section of a translucent wall for using the container in accordance with an embodiment of the present invention.

### Detailed description

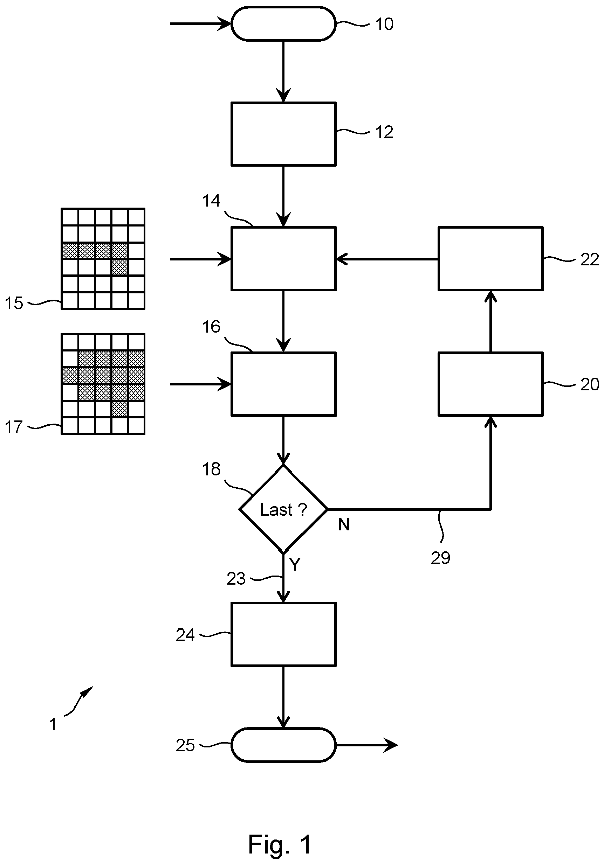

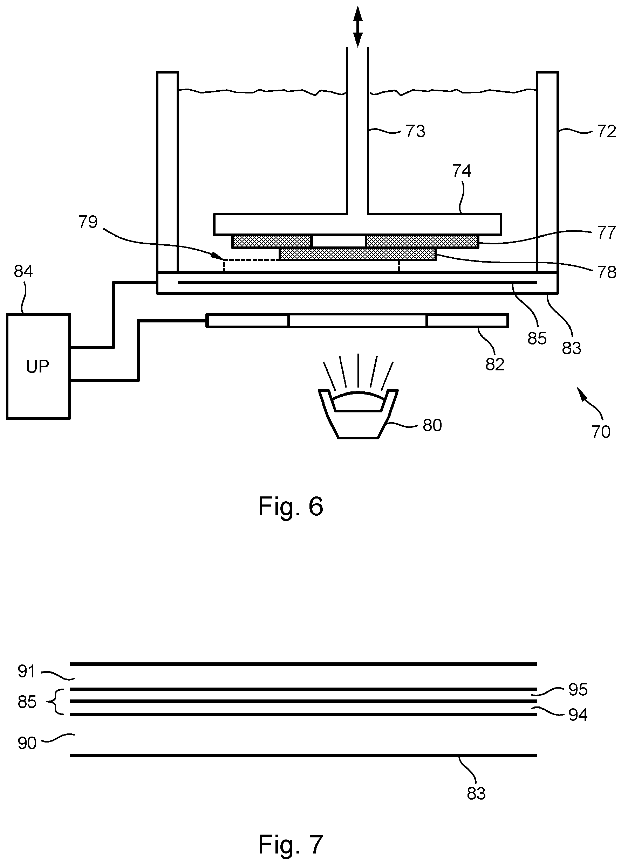

In figure 1, a method in accordance with the present invention is schematically illustrated. The method 1 starts at step 10 wherein an assignment for manufacturing an arbitrary object may be received by an additive manufacturing system, such as the system 70 in figure 6. In step 12, the carrier platform 74 of the system 70 is lowered to approach the translucent wall 83 in the container of the system 70. The carrier platform 74 will be lowered to such a height above the translucent wall 83 that the space between the translucent wall 83 and the carrier platform 74 will have the thickness of a single layer of the object to be printed.

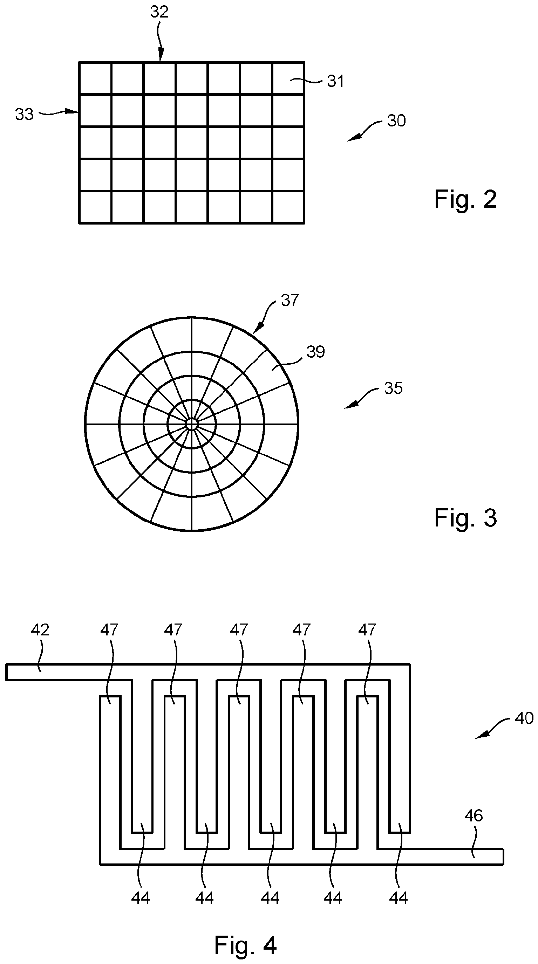

The translucent wall 83 comprises an electrode arrangement of transparent electrodes. For example, the translucent wall 83 may comprise an electrode arrangement 85 providing a configuration as illustrated in any of figures 2-5. The electrodes of the electrode arrangement 85 may be independently controllable using a controller 84, in order to selectively apply an electric field locally where an electrode is activated. For example by powering one of the electrodes at a certain voltage, the ambient space around that powered electrode will be under influence of an electric field. The electric field will be present in the layer between the carrier platform 74 and the translucent wall 83, where the building material is present. The building material 75 comprises a two phase electro-active suspension fluid consisting of particles and liquid medium. The particles of the two phase electro-active suspension fluid will experience the electric field locally applied through the electrodes of the electro arrangement, and as a result thereof will become polarized. Because the particles are suspended in the liquid medium, the particles may freely move at relatively low friction, and may start to reorganize under influence of the applied electric field. This will result for example in a clustering of particles, or in the forming of chains. For example, in case the electrode arrangement 85 applies differently powered electrodes with different polarities, a bridge of particles may be formed between electrodes having a different polarity.

Back to figure 1, in step 14, the electrode arrangement 85 may be powered such that a particular desired pattern 15 of powered electrodes (the black color electrodes in the figure) will be powered at a certain voltage. This may cause a clustering of particles locally where the electric field is applied. Next, in step 16 the optical mask 82 will be operated such as to illuminate a desired pattern 17 of voxels to be cured. A pattern 17 may be different from the pattern 15, in order to achieve different material properties in the end product in different parts of the object. As a skilled person may appreciate, if desired, it is also possible to uniformly apply an electric field everywhere in order to obtain uniform material properties across a single layer, or even across the full object.

In step 18, it is determined whether the printed and cured layer is the last layer of the object to be manufactured. If this is not the case, the process follows branch 19 and in step 20 raises the carrier platform of a single layer upwards. In step 22, new layer data (e.g. clustering layer data and/or curing layer data) may be obtained and the process continues again in step 14 for the next layer.

If in step 18 it is determined that the printed layer is the last layer of the object, the method follows branch 23 and in step 24 moves the carrier platform 74 upwards, in order to end (step 25) the manufacturing process.

Various layouts and designs for providing the electrode arrangement 85 may be applied. Figures 2-5 illustrate a number of different exemplaric designs of electrode arrangements 30, 35, 40 and 50, which all may be applied to provide the electrode arrangement 85. The invention is not limited to a specific design. Figure 2 schematically illustrates an electrode arrangement 30 for use in a container 72 in accordance with the present invention. The electrode arrangement 30 consists of a matrix configuration of electrodes 31. The matrix configuration consists of columns 32 and rows 33 with powerable electrodes 31 forming pixels.

Figure 3 schematically illustrates an alternative electrode arrangement 35 that is radially symmetric. The radially symmetric electrode arrangement consists of radial columns 37 consisting of a plurality of pixel electrodes 39, each of which is independently controllable.

A further alternative electrode configuration 40 is schematically illustrated in figure 4. In figure 4, the electrode arrangement 40 consists of a plurality of finger shaped electrodes 44 that are alternatingly arranged with further finger shaped electrodes 47. For example, a first electrode set 42 with electrodes 44 can be powered at a first voltage or first voltage polarity, whereas a second electrode set 46, with electrodes 47 may be powered at a second voltage or second voltage polarity.

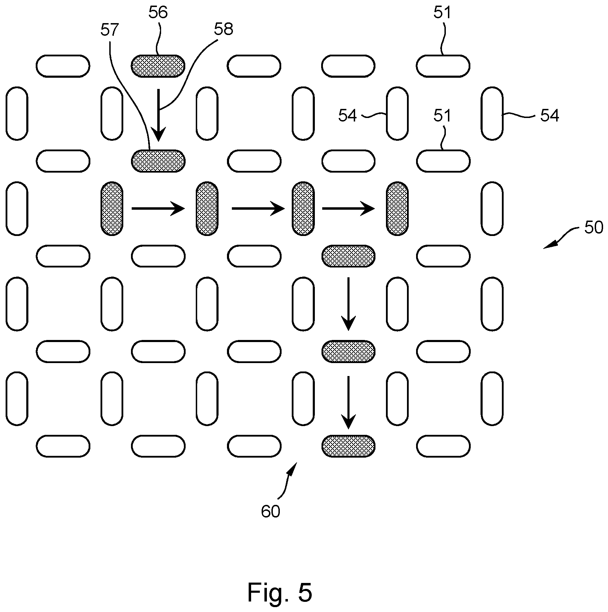

Yet another electrode arrangement is schematically presented in figure 5. In this electrode arrangement, each of the electrodes 51 and 54 is asymmetrically shaped having a longitudinal direction. The horizontally arranged electrodes 51 are aligned in rows, whereas the vertically oriented electrodes 54 are aligned in columns. Furthermore, the voltage polarity of the electrodes 51 in rows 61 may be different from the voltage polarity of electrodes 51 in rows 62. Moreover, the voltage polarity of electrodes 54 in rows 64 may also be different from the voltage polarity of the electrodes 54 in columns 65. As a result, as illustrated for electrodes 56 and 57, these electrodes can be powered in order to provide an orientation to the electric field 58 in a certain desired direction. Likewise, suitably powering the electrodes 54 in each of the columns 64 and 65, and each of the rows 61 and 62, a path of oriented particles may be created as illustrated in figure 5.

Once this is achieved, optical radiation may be applied with optical source 80 through mask 82 in order to cure the respective layer accordingly.

Figure 6 schematically illustrates a system 70 in accordance with the present invention. The system 70 comprises a carrier platform 74 that can be raised and lowered via axis 73 in container 72. At the beginning of the additive manufacturing method, the platform 74 is lowered to just above the translucent wall 83 of the container 72. A single layer is printed to the carrier platform 74, and thereafter the carrier platform 74 is raised over a single layer. Figure 6 schematically illustrates a first layer 77 and a second layer 78. In the situation illustrated in figure 6, a third layer 79 is to be printed. The system 70 further comprises a controller 84 which controls the electrode arrangement 85 present in the translucent wall 83 and the optical mask 82 present featuring the optical source 80 and the container 72. It may be appreciated (although not illustrated in figure 6) that the controller 84 may likewise control operation of the optical source 80 to cure the respective layer 79 to be cured. The container 72 is filled with a two phase electro-active suspension liquid 75. The suspension liquid 75 consists of a liquid medium wherein particles reside. The particles are polarizable and preferably the electric permittivity of the liquid medium is different from the electric permittivity of the particles. For example, the electric permittivity of the particles may be at least twice or may be ten times as high as the electric permittivity of the liquid medium. As a result, applying a local electric field through the electrode arrangement 85 in the translucent wall 83, will locally polarize the particles in the suspension fluid 75. This will result in the above described clustering of particles that is advantageously be used to modify the local properties of the object to be printed.

A cross-section of the translucent wall 83 is schematically illustrated in figure 7. The cross-section may for example consist of two transparent isolating layers 91 and 90, in between which an electrode arrangement 85 consisting of electrode layers 94 and 95 is present. The electrode layers 94 and 95 may together for example form the electrode arrangement 85. Layer 95 may for example include the specific arrangement of electrodes illustrated in any of the figures 2 through 5, whereas the conductive paths to power each of the electrodes selectively may be present in layer 94. The electrode arrangement 85, although depicted in figure 7 with two layers 94 and 95, may consist of any desired number of functional layers, i.e. at least one layer with no maximum as long as it is translucent in order to enable curing.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Resin based additive manufacturing process for manufacturing an object from a building material, wherein the building material is held in a container comprising at least one translucent wall, the method comprising the steps of:
curing at least one layer of the object onto a carrier surface or onto a preceding cured layer of the object, wherein the curing is performed by providing optical radiation from an optical source through the translucent wall such as to illuminate the at least one layer to be cured;
wherein the building material comprises a two-phase electro-active suspension fluid including a mix of particles in a liquid medium, and wherein the translucent wall comprises an electrode arrangement of at least two electrodes, wherein the method further comprises:
applying, by the electrode arrangement and prior to the step of curing the at least one layer, an electric field to the building material for clustering a plurality of the particles within the two-phase electro-active suspension fluid during said curing of the building material.

2. Method according to claim 1, wherein the electrode arrangement comprises a plurality of electrodes forming an electrode array, wherein the step of applying the electric field comprises:
selectively powering one or more electrodes for selectively applying a local electric field near the one or more powered electrodes, such as to form an arrangement of clusters of particles in the suspension fluid during the curing.

3. Method according to claim 2, wherein the optical source is configured for selectively illuminating, using a controller, pixels of the layer to be cured, wherein the step of curing is performed by selectively exposing, in accordance with layer curing data, one or more pixels in the layer to the optical radiation; and
wherein the step of selectively powering the one or more electrodes is performed using the controller based on layer clustering data for clustering of the particles during curing of the at least one layer.

4. Method according to any of the preceding claims, wherein the particles of the two-phase electro-active suspension fluid comprise at least one of a group comprising: spherical particles, non-spherical particles, symmetric particles, asymmetric particles, longitudinal particles, curved particles, arbitrary shaped particles, electrically conductive particles, electrically isolating particles, thermally conductive particles, thermally isolating particles, magnetic particles, non-magnetic particles, coated particles, hollow particles, solid particles, rigid particles, flexible particles, transparent or translucent particles, opaque particles.

5. Method according to any of the preceding claims, wherein the particles and the liquid medium comprised by the two-phase electro-active suspension fluid are selected such that a relative permittivity of the particles is different from a relative permittivity of the liquid medium, preferably such that the relative permittivity of the particles being at least 20% smaller or larger than the relative permittivity of the medium, more preferably such that the relative permittivity of the particles is at least two times the relative permittivity of the liquid medium or that the relative permittivity of the particles is less than half of that of the liquid medium.

6. Method according to any of the preceding claims, wherein the additive manufacturing process is at least one of a stereolithographic process or a digital light processing process.

7. Container for use in a resin based additive manufacturing process, wherein the container is suitable for holding a building material, wherein the container comprises a plurality of walls for defining an interior of the container, the walls including at least a bottom wall and one or more side walls, wherein at least one wall of the plurality of walls is a translucent wall for enabling optical radiation to enter the container for curing the building material, wherein the container is suitable for holding a two-phase electro-active suspension fluid as being comprised by the building material, and wherein the translucent wall comprises an electrode arrangement of at least two electrodes for applying an electric field to the building material for enabling a clustering of particles within the two-phase electro-active suspension fluid during curing of the building material.

8. Container according to claim 7, wherein the electrode arrangement comprises a plurality of electrodes forming an electrode array, for enabling a local electric field to be selectively applied near each of the electrodes.

9. Container according to claim 8, wherein the electrodes are arranged in a pattern, wherein the pattern includes one or more of a group comprising: parallel electrodes, concentrically arranged electrodes, spirally arranged electrodes, electrodes arranged in a star pattern, a matrix pattern of electrodes, interdigitated electrodes and pointy electrodes.

10. Container according to any of the claims 7-9, wherein the at least two electrodes of the electrode arrangement are connected such that the electrodes are selectively operable to be powered at different voltages or at a same voltage with different polarities.

11. Container according to any of the claims 7-10, wherein the translucent wall comprises a conductive transparent layer, wherein the conductive transparent layer is patterned such as to form the electrode arrangement.

12. Container according to any one or more of the claims 7-11, wherein the electrode arrangement comprises a plurality of electrodes arranged side-by-side in one or more directions, wherein each electrode is configured for being operated at a different polarity with respect to its neighboring electrodes in the or each direction.

13. Container according to any of the claims 7-12, further comprising a controller configured for selectively operating each of the electrodes of the electrode arrangement dependent on layer clustering data for a layer of the building material to be cured, for local clustering of the particles near the selectively operated electrodes.

14. Additive manufacturing system for applying a resin based additive manufacturing process for manufacturing an object from a building material, wherein the system comprises a controller, a container comprising at least one translucent wall, a carrier surface for supporting a surface of an object to be manufactured, wherein the carrier surface is configured to be suspended in or above the container, and an optical source configured for emitting optical radiation for curing a layer of the building material onto the carrier surface or onto a preceding cured layer of the object, wherein the optical source is configured for selectively illuminating, using the controller, pixels of the layer to be cured, wherein the container is suitable for holding the building material which includes a two-phase electro-active suspension fluid, the suspension fluid including a mix of particles in a liquid medium, and wherein the translucent wall comprises an electrode arrangement of at least two electrodes for applying an electric field to the building material for enabling a clustering of particles within the two-phase electro-active suspension fluid during curing of the building material.

15. Additive manufacturing system according to claim 14, wherein the additive manufacturing system is at least one of a stereolithographic system or a digital light processing system.
